# EUROPÄISCHE PATENTSCHRIFT

(11) **EP 2 943 750 B1**
(45) Veröffentlichungstag und Bekanntmachung des Hinweises auf die Patenterteilung: **10.07.2019**
(21) Anmeldenummer: 14700084.8
(22) Anmeldetag: 07.01.2014
(51) Int. Cl.: G01C 21/36

(54) **NAVIGATIONSVORRICHTUNG FÜR EIN FAHRZEUG UND VERFAHREN ZUR ERZEUGUNG EINES ANZEIGESIGNALS FÜR EINE NAVIGATIONSVORRICHTUNG FÜR EIN FAHRZEUG**
NAVIGATION DEVICE FOR A VEHICLE AND METHOD FOR GENERATING A DISPLAY SIGNAL FOR A NAVIGATION DEVICE FOR A VEHICLE
DISPOSITIF DE NAVIGATION POUR UN VÉHICULE ET PROCÉDÉ DE GÉNÉRATION D'UN SIGNAL D'AFFICHAGE POUR UN TEL DISPOSITIF DE NAVIGATION

(30) Priorität: 10.01.2013 DE 102013000878
(43) Veröffentlichungstag der Anmeldung: 18.11.2015
(73) Patentinhaber: Volkswagen Aktiengesellschaft, 38440 Wolfsburg (DE)
(72) Erfinder: CENGIL, Sükrü, 30938 Burgwedel (DE)
(86) Internationale Anmeldenummer: PCT/EP2014/050124
(87) Internationale Veröffentlichungsnummer: WO 2014/108386

(56) Entgegenhaltungen:
- WO-A1-2011/144849
- DE-A1- 19 920 709
- JP-A- 2001 227 965
- US-A1- 2010 305 853
- US-A1- 2012 123 678

## Beschreibung

Die vorliegende Erfindung liegt auf dem Gebiet der Navigationssysteme und bezieht sich insbesondere auf eine Navigationsvorrichtung für ein Fahrzeug und ein Verfahren zur Erzeugung eines Anzeigesignals für eine Navigationsvorrichtung für ein Fahrzeug.

Es existiert eine Vielzahl von Navigationssystemen zur Anzeige von Fahrt- oder Flugrouten. Derartige Navigationssysteme umfassen beispielsweise eine Anzeigevorrichtung in Form eines Displays, auf welchem ein Ausschnitt einer Land- bzw. Straßenkarte basierend auf digitalen Geodaten, oder topografischen Daten, dargestellt werden kann. Üblicherweise zeigt das Display im Wesentlichen den Verlauf der Straßen und Wege innerhalb des dargestellten Kartenausschnitts sowie Merkmale der Umgebung, wie beispielsweise Umrisse von anliegenden Gebäuden, Stadteile oder bewaldeten Gebieten. Herkömmlicherweise können dreidimensionale Geodaten mit Navigationssystemen zweidimensional dargestellt werden.

Es ist jedoch häufig so, dass in bestimmten Darstellungsmodi, wie z.B. die 3D-Darstellung, eine Vorschau der Zielführung um einen Gebäudeblock oder ganze Areale aufgrund der Perspektive und der Höhe der Gebäude nicht gut oder gar nicht gegeben ist. Meist sind solche Darstellungen nur sehr rudimentär. Manche Systeme bieten dazu eine Art Transparenzmodus an, sodass man durch die Gebäude durchschauen kann. Dies bringt jedoch einige Nachteile mit sich, wie z.B. die Überlagerung von zu vielen Gebäudeflächen, was wiederum verwirren kann. Die für die Navigation oder Zielführung notwendigen Informationen können also gerade auf der meist begrenzten Anzeigefläche eines Navigationssystems nicht in ausreichendem Detail dargestellt werden. Es wird also nur eine unzureichende Information bezüglich der Navigation oder Zielführung angeboten, wodurch auch die Nutzungssicherheit und Nutzungszuverlässigkeit sinkt, da der Benutzer nur sehr spät erkennen kann, in welche Richtung der weitere Weg bis zu seinem Ziel verläuft oder der Benutzer sehr lange auf die Anzeigefläche sehen muss, um sich zu orientieren und so vom Verkehr abgelenkt sein kann.

Die Druckschrift WO 2011/144849 beschreibt ein Navigationssystem, dass eine Navigationskarte in unterschiedlichen Abständen von einem Beobachtungspunkt unter unterschiedlichen Blickwinkeln zeigt. Eine vorgeschlagene Fahrtroute kann unter unterschiedlichen Blickwinkeln bis zum Ziel angezeigt werden.

WO 2011/144849 A1 lehrt eine Navigationshilfe mit verbesserter Darstellung von Displaydaten. Die Anzeige auf einem Bildschirm umfasst zumindest 3-D Darstellungen des Panoramas ausgehend vom Betrachtungspunkt.

DE 199 20 709 A1 lehrt ein Verfahren zum Gewinnen einer dreidimensionalen Kartendarstellung und ein Navigationssystem. Bei einem Verfahren zum Gewinnen einer dreidimensionalen Kartendarstellung aus digitalen, zweidimensionalen Straßenkartendaten werden die Straßenkartendaten für ein darzustellendes Blickfeld mit einer vorbestimmten Sichtweite radialsymmetrisch um einen virtuellen Standpunkt durch eine polynominale Transformation gekrümmt.

US 2010/0305853 A1 lehrt ein 3-D Karten-Display. Dabei beinhaltet das Computer generierte Karten-Display eine Beobachtungspunkt-Referenz in dem durch die Karte gegebenen geografischen Gebiet, wobei die Karte auf einer gebogenen Oberfläche dargestellt wird.

US 2012/123678 A1 lehrt ein Routing-Modul, das POIs identifiziert, die von einer Route aus mit Kosten von weniger als einer vorgegebenen Entfernung erreicht werden können. Dazu führt eine Routing-Engine eine Reverse-Exploration an Knoten in der geplanten Route durch.

Es besteht jedoch der Bedarf, eine Navigationsvorrichtung für ein Fahrzeug zu schaffen, die eine Erhöhung der Nutzungssicherheit, der Nutzungszuverlässigkeit und/oder der Informationsdichte von benötigten Informationen ermöglicht.

Diesem Bedarf trägt eine Navigationsvorrichtung für ein Fahrzeug gemäß Anspruch 1, ein Verfahren zur Erzeugung eines Anzeigesignals für eine Navigationsvorrichtung für ein Fahrzeug gemäß Anspruch 9 und ein Computerprogramm gemäß Anspruch 10 Rechnung.

Einige Ausführungsbeispiele beziehen sich auf eine Navigationsvorrichtung für ein Fahrzeug mit einem Datenbereitsteller und einem Prozessor. Der Datenbereitsteller ist ausgelegt, um Daten einer Navigationskarte bereitzustellen. Ferner ist der Prozessor ausgelegt, um basierend auf einer ermittelten Position eines Fahrzeugs Daten einer Navigationskarte einer Umgebung des Fahrzeugs von dem Datenbereitsteller zu erhalten und ein die Navigationskarte repräsentierendes Anzeigesignal für eine Anzeigeeinrichtung zur Wiedergabe der Navigationskarte bereitzustellen. Der Prozessor ist ausgelegt, um das Anzeigesignal zu erzeugen, sodass die Navigationskarte sich entlang einer Referenzfläche erstreckend und aus einer von der Position des Fahrzeugs abhängigen, über der Navigationskarte angeordneten Ansichtsposition betrachtet durch die Anzeigeeinrichtung wiedergebbar ist. Zusätzlich ist der Prozessor ausgelegt, um die Referenzfläche ab einem vordefinierten Abstand von der Ansichtsposition entfernt zu der Ansichtsposition hin zu verbiegen. Zusätzlich erzeugt der Prozessor das Anzeigesignal, sodass eine neben einer bevorzugten Fahrtroute zusätzliche Information von Interesse in einem Teil der Navigationskarte, der weiter als der vordefinierten Abstand von der Ansichtsposition entfernt ist, hervorgehoben dargestellt ist

Durch das Verbiegen oder Krümmen der Referenzfläche und damit auch der Navigationskarte können von der Ansichtsposition weiter entfernte Bereiche der Navigationskarte für den Benutzer leicht überschaubar dargestellt werden. Dadurch kann beispielsweise eine Zielführung auf der Navigationskarte (also der eingezeichnete Weg zum gewünschten Ziel) für den Benutzer sichtbar dargestellt werden, auch wenn der Weg um hohe Gebäude oder Geländeunebenheiten führt, die den Weg zum Ziel ohne das Verbiegen verdecken würden. Ferner können zusätzliche Informationen von Interesse eingeblendet oder hervorgehoben dargestellt werden, die sonst nicht sichtbar wären. Dadurch kann die Informationsdichte an vom Benutzer benötigten Informationen, die durch eine Anzeigeeinrichtung basierend auf dem Anzeigesignal wiedergegeben werden kann, deutlich erhöht werden. Ferner kann beispielsweise die Nutzungssicherheit und/oder die Nutzungszuverlässigkeit der Navigationsvorrichtung erhöht werden, da ein Benutzer frühzeitig erkennen kann, in welche Richtung der Weg zu seinem Ziel führt.

Gemäß der Erfindung ist die zusätzliche Information von Interesse ein Objekt von Interesse. Durch die gebogene Karte können verschiedene Objekte von Interesse für den Benutzer leicht überschaubar dargestellt werden. Dadurch kann beispielsweise die Nutzungssicherheit und/oder die Nutzungszuverlässigkeit der Navigationsvorrichtung erhöht werden. Gemäß der Erfindung gehört das Objekt von Interesse zu einer Objektkategorie von Interesse, wobei das Objekt von Interesse das am schnellsten von der bevorzugten Fahrtroute erreichbare Objekt von Interesse ist.

Bei einigen Ausführungsbeispielen ist die zusätzliche Information von Interesse zusätzlich eine zu der bevorzugten Fahrtroute alternative Fahrtroute. Durch die gebogene Karte können verschiedene Fahrtrouten für den Benutzer leicht vergleichbar dargestellt werden. Dadurch kann beispielsweise die Nutzungssicherheit und/oder die Nutzungszuverlässigkeit der Navigationsvorrichtung erhöht werden.

Gemäß der Erfindung verbiegt der Prozessor die Referenzfläche ab dem vordefinierten Abstand von der Ansichtsposition über eine Biegelänge zu der Ansichtsposition hin. Durch die Biegelänge kann beispielsweise festgelegt werden über welchen Bereich die Referenzfläche gebogen wird. Danach kann die Referenzfläche eben weiter verlaufen. Umso länger die Strecke z.B. ist, über die die Referenzfläche gebogen wird, umso mehr kann die Referenzfläche zu der Ansichtsposition hin gebogen. Dadurch kann beispielsweise je nach Geländeart durch Variation der Biegelänge die Informationsdichte, die Nutzungssicherheit und/oder die Nutzungszuverlässigkeit weiter erhöht werden.

Bei einigen Ausführungsbeispielen verbiegt der Prozessor die Referenzfläche ab dem vordefinierten Abstand von der Ansichtsposition mit einer einstellbaren oder festen Krümmung zu der Ansichtsposition hin. Durch das Einstellen der Krümmung kann festgelegt werden, wie stark die Referenzfläche pro Streckeneinheit des gebogenen Bereichs zu der Ansichtsposition hin gebogen wird. Z.B. führt eine starke Krümmung, also ein kleiner Krümmungsradius, zu einer stärkeren Verbiegung der Referenzfläche zu der Ansichtsposition hin als eine schwache Krümmung, also ein großer Krümmungsradius. Durch die Einstellung der Krümmung kann die Informationsdichte der benötigten Informationen, die Nutzungssicherheit oder die Nutzungszuverlässigkeit für den Benutzer weiter verbessert werden.

Einige Ausführungsbeispiele beziehen sich auf ein Fahrzeug mit einer Navigationsvorrichtung nach dem zuvor beschriebenen Konzept.

Nachfolgend werden unter Bezugnahme auf die beiliegenden Figuren Ausführungsbeispiele näher erläutert. Es zeigen:
Fig. 1a ein Blockdiagramm einer Navigationsvorrichtung für ein Fahrzeug;
Fig. 1b eine schematische Darstellung einer zu der Ansichtsposition hin gebogenen Referenzfläche;
Fig. 2 eine weitere schematische Darstellung einer zu der Ansichtsposition hin gebogenen Referenzfläche;
Fig. 3 eine weitere schematische Darstellung einer zu der Ansichtsposition hin gebogenen Referenzfläche;
Fig. 4 eine schematische Ansicht einer gebogenen Navigationskarte;
Fig. 5 eine schematische Ansicht einer weiteren gebogenen Navigationskarte;
Fig. 6 eine schematische Ansicht einer weiteren gebogenen Navigationskarte;
Fig. 7 eine schematische Ansicht einer gebogenen Navigationskarte mit einer hervorgehobenen alternativen Fahrtroute;
Fig. 8 eine schematische Ansicht einer gebogenen Navigationskarte mit hervorgehobenen Objekten von Interesse im gebogenen Kartenteil;
Fig. 9 eine schematische Ansicht einer gebogenen Navigationskarte mit hervorgehobenen Objekten von Interesse im ebenen Kartenteil;
Fig. 10 ein Blockdiagramm einer Navigationsvorrichtung; und
Fig. 11 ein Flussdiagramm eines Verfahrens zur Erzeugung eines Anzeigesignals für eine Navigationsvorrichtung für ein Fahrzeug.

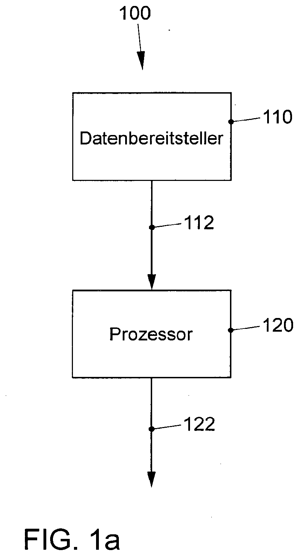

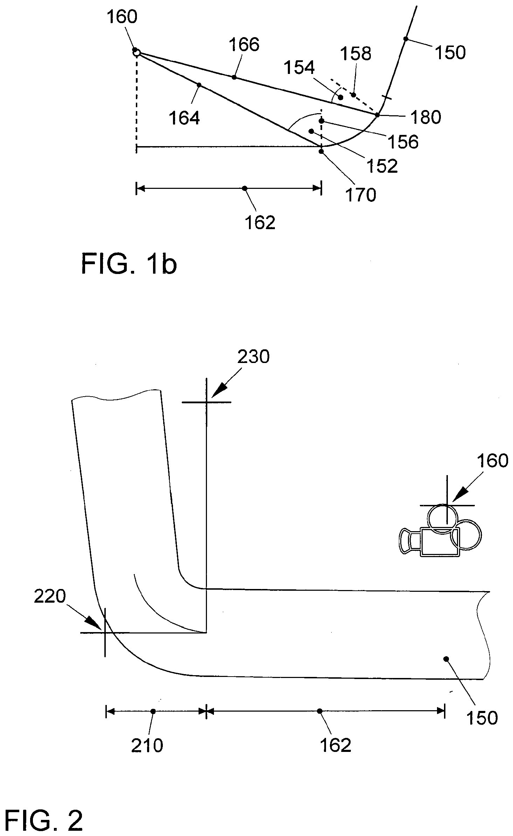

Fig. 1 zeigt ein Blockdiagramm einer Navigationsvorrichtung 100 für ein Fahrzeug entsprechend einem Ausführungsbeispiel. Die Navigationsvorrichtung 100 umfasst einen Datenbereitsteller 110, der mit einem Prozessor 120 verbunden ist. Der Datenbereitsteller 110 stellt Daten 112 einer Navigationskarte bereit. Der Prozessor 120 erhält basierend auf einer ermittelten Position eines beweglichen Objekts (eines Fahrzeugs) Daten 112 einer Navigationskarte einer Umgebung des beweglichen Objekts von dem Datenbereitsteller 110 und stellt ein die Navigationskarte repräsentierendes Anzeigesignal 122 für eine Anzeigeeinrichtung zur Wiedergabe der Navigationskarte bereit. Ferner erzeugt der Prozessor 120 das Anzeigesignal 122 so, dass die Navigationskarte sich entlang einer Referenzfläche erstreckend und aus einer von der Position des beweglichen Objekts abhängigen, über der Navigationskarte angeordneten Ansichtsposition betrachtet durch die Anzeigeeinrichtung wiedergebbar ist. Dabei verbiegt der Prozessor 120 die Referenzfläche ab einem vordefinierten Abstand von der Ansichtsposition entfernt zu der Ansichtsposition hin. Zusätzlich erzeugt der Prozessor 120 das Anzeigesignal 122, sodass eine neben einer bevorzugten Fahrtroute zusätzliche Information von Interesse in einem Teil der Navigationskarte, der weiter als der vordefinierten Abstand 162 von der Ansichtsposition 160 entfernt ist, hervorgehoben dargestellt ist.

Durch das Verbiegen der Referenzfläche und dadurch auch der Navigationskarte zu der Ansichtsposition hin können dem Benutzer Informationen (z.B. über die Zielführung) bereitgestellt werden, die in einer ebenen Darstellung nicht bereitgestellt werden könnten. Insbesondere bei dreidimensionalen Karten, die beispielsweise Gebäude oder Geländeunebenheiten darstellen, können durch das beschriebene Konzept auch Bereiche dargestellt werden, die ansonsten von den Gebäuden oder Geländeunebenheiten verdeckt wären. Da die Anzeigeflächen von Navigationssystemen z.B. im Vergleich zu Computerbildschirmen oder Fernsehern normalerweise recht klein ist, ist eine Erhöhung der Informationsdichte von benötigten oder gewünschten Informationen auf der Anzeigefläche für den Benutzer äußerst hilfreich. Dadurch kann z.B. dem Fahrer eines Fahrzeugs als Benutzer der Navigationsvorrichtung 100 ermöglicht werden, bei einer Zielführung die noch zurückzulegende Wegstrecke besser zu übersehen und so vor gefährlichen Stellen oder Besonderheiten auf der Wegstrecke früher gewarnt zu werden oder vorausschauender notwendige Fahrspurwechsel zum Abbiegen vornehmen zu können (z.B. auch wenn eine Sprachführung durch Kinderlärm im Auto oder sonstige Geräuschkulissen schwer möglich ist). Ferner können zusätzliche Informationen von Interesse eingeblendet oder hervorgehoben dargestellt werden, die sonst nicht sichtbar wären. Dadurch kann die Nutzungssicherheit und/oder die Nutzungszuverlässigkeit deutlich erhöht werden, da sich der Benutzer schneller einen Überblick über die Umgebung und/oder eine Zielführung machen kann oder keine oder wenige Einstellungen vornehmen muss, um sich die nötigen Informationen zu besorgen.

Je nach Anwendungsgebiet der Navigationsvorrichtung 100 kann das Fahrzeug ein anderes sein. So kann ein Fahrzeug beispielsweise ein Motorrad, ein Personenkraftwagen oder ein Lastkraftwagen sein. Der Benutzer der Navigationsvorrichtung 100 kann beispielsweise entsprechend der Fahrer eines Fahrzeugs sein. Die Navigationsvorrichtung 100 kann ein tragbares oder ein festinstalliertes System sein.

Der Datenbereitsteller 110 stellt Daten 112 einer Navigationskarte bereit. Dabei kann der Datenbereitsteller 110 beispielsweise eine Speichereinheit (z.B. Festplatte, Speicherkarte, interner Speicher oder ein CD- oder DVD-Laufwerk) oder eine Schnittstelle der Navigationsvorrichtung 100 zum Verbinden mit einer internen oder externen Speichereinheit sein. Die Navigationskarte wird durch dreidimensionale Daten 112, die die Navigationskarte repräsentieren (z.B. dreidimensionale Daten von Punkten der Navigationskarte, die sich beispielsweise auf die Referenzfläche beziehen) bereitgestellt. Die Daten 112 können dabei beispielsweise je nach gewähltem Übertragungsprotokoll durch geeignete Signale bereitgestellt werden. Beispielsweise kann der Datenbereitsteller 110 auch eine drahtlose Schnittstelle zum Empfang von Daten aus dem Internet sein, sodass die Daten 112 der Navigationskarte auch über das Internet bereitgestellt werden können.

Die wiederzugebende Navigationskarte kann beispielsweise ein Ausschnitt einer Land- oder Straßenkarte basierend auf digitalen Geodaten, oder topografischen Daten, sein. Z.B. kann ein Verlauf der Straßen und Wege innerhalb des dargestellten Kartenausschnitts sowie Merkmale der Umgebung, wie beispielsweise Umrisse von anliegenden Gebäuden, Stadteile oder bewaldeten Gebieten wiedergegeben werden. Ferner kann eine Zielführung, also eine Markierung oder Hervorhebung eines Weges zu einem gewünschten Ziel, eingeblendet werden.

Der Prozessor 120 erhält von dem Datenbereitsteller 110 Daten 112 einer Navigationskarte einer Umgebung des Fahrzeugs basierend auf einer ermittelten Position des Fahrzeugs. Die Position des Fahrzeugs kann beispielsweise durch einen Positionsbestimmer, wie z.B. ein GPS-System (Global Positioning System) oder ein anderes Lokalisierungssystem, ermittelt werden und entweder dem Datenbereitsteller 110 (der dann die entsprechenden Kartendaten an den Prozessor bereitstellt) oder dem Prozessor 120 (der dann entsprechende Kartendaten beim Datenbereitsteller anfordert) bereitstellen. Der Positionsbestimmer kann dabei Teil der Navigationsvorrichtung 100 (z.B. bei einem tragbaren Navigationssystem für Fahrzeuge) oder eine externe Komponente (z.B. bei Fahrzeugen oder ferngesteuerten Objekten) sein. Die Daten 112 der Navigationskarte umfassen Informationen über die nähere Umgebung des Fahrzeugs, sodass der Benutzer erkennen kann wie er sich oder das bewegliche Objekt sich bewegen kann, um ein gewünschtes Ziel zu erreichen.

Der Prozessor 120 erzeugt ein die Navigationskarte repräsentierendes Anzeigesignal 122 und stellt dieses für eine Wiedergabe der Navigationskarte durch eine Anzeigeeinrichtung bereit. Ein solches Anzeigesignal 122 kann beispielsweise ein Videosignal oder ein Steuersignal sein. Das Anzeigesignal 122 kann in einem Format bereitgestellt werden, das von der jeweiligen Anzeigeeinrichtung zur Wiedergabe von Informationen (z.B. in Form von Bildern) verarbeitet werden kann.

Die Anzeigeeinrichtung kann optional Teil der Navigationsvorrichtung 100 (z.B. bei tragbaren Navigationssystemen) oder eine externe Komponente, an die die Navigationsvorrichtung 100 angeschlossen werden kann, sein.

Die bevorzugte Fahrtroute kann eine von der Navigationsvorrichtung 100 vorgeschlagene Fahrtroute (z.B. basierend auf einer Voreinstellung, wie schnellste oder kürzeste Route) sein.

Die zusätzliche Information von Interesse wird in einem Teil der Navigationskarte, der weiter als der vordefinierten Abstand 162 von der Ansichtsposition 160 entfernt ist, hervorgehoben dargestellt. In anderen Worten, die zusätzliche Information von Interesse kann im gebogenen Teil der Navigationskarte dargestellt werden. Eine Hervorhebung kann beispielsweise durch eine farbig hervorstechende Darstellung (z.B. bunt an Stelle von grau), durch eine hellere Darstellung als die Umgebung und/oder eine dreidimensionale Darstellung (z.B. in Kontrast zu einer zweidimensionalen Umgebung) erfolgen.

Gemäß der Erfindung ist die zusätzliche Information von Interesse ein Objekt vor Interesse. Das Objekt von Interesse kann beispielsweise ein Objekt sein, das durch eine Voreinstellung oder eine Benutzerauswahl vorübergehend oder auf Dauer von Interesse für den Benutzer ist (z.B. eine Tankstelle oder eine Parkgarage in der Nähe der Fahrtroute oder des Ziels der Fahrt). Die Information von Interesse kann beispielsweise von der bevorzugten Fahrtroute abhängig sein. Da die bevorzugte Fahrtroute beispielsweise den Ausschnitt der Navigationskarte festlegen kann, der durch das Anzeigesignal wiedergebbar ist, kann die Information von Interesse eine Information sein, die von der bevorzugten Fahrtroute abhängig ist.

Das Objekt von Interesse gehört erfindungsgemäß zu einer Objektkategorie von Interesse. Eine Objektkategorie von Interesse kann Objekte einer vorbestimmten oder vom Benutzer ausgewählten Kategorie (z.B. Tankstellen, Hotels oder Parkhäuser) enthalten. Zum Beispiel kann eine Objektkategorie von Interesse vom Datenbereitsteller gespeicherte Tankstellen umfassen.

Gemäß der Erfindung ist das Objekt von Interesse das am schnellsten von der bevorzugten Fahrtroute erreichbare Objekt von Interesse der Objekte der Objektkategorie von Interesse.

Die zusätzliche Information von Interesse kann zusätzlich durch unterschiedliche Arten von Informationen repräsentiert werden, die mit der bevorzugten Fahrtroute in Zusammenhang stehen. Z.B. kann die zusätzliche Information von Interesse eine zu der bevorzugten Fahrtroute alternative Fahrtroute sein. Die alternative Fahrtroute kann beispielsweise eine kürzeste oder schnellste Fahrtroute sein.

Beispielsweise kann vor Beginn einer navigationsunterstützten Fahrt die bevorzugte Fahrtroute und die alternative Fahrtroute hervorgehoben dargestellt werden. Der Benutzer kann sich dann für eine der Fahrtrouten entscheiden.

Das Objekt von Interesse kann zweidimensional (oder auch dreidimensional) in dem gebogenen Teil der Navigationskarte dargestellt werden.

Das Ziel der bevorzugten Fahrtroute ist beispielsweise weiter als der vordefinierten Abstand 162 von der Ansichtsposition 160 entfernt. Dadurch wird beispielsweise ein Teil der bevorzugten Fahrtroute in dem gebogenen Teil der Navigationskarte dargestellt. Zusätzlich kann dann zumindest eine Information von Interesse in Abhängigkeit der bevorzugten Fahrtroute im gebogenen Teil der Navigationskarte dargestellt werden.

Der Prozessor 120 kann das Anzeigesignal 122 erzeugen, sodass mehrere von der bevorzugten Fahrtroute abhängige zusätzliche Information von Interesse gleicher Kategorie (z.B. mehrere alternative Fahrtrouten oder mehrere Objekte einer Objektkategorie von Interesse) in einem Teil der Navigationskarte, der weiter als der vordefinierten Abstand 162 von der Ansichtsposition 160 entfernt ist, hervorgehoben dargestellt sind.

Ergänzend zu der Information von Interesse kann der Prozessor 120 optional das Anzeigesignal 122 erzeugen, sodass zusätzlich eine von der bevorzugten Fahrtroute abhängige zusätzliche Information von Interesse gleicher Kategorie (wie die im gebogenen Teil der Navigationskarte dargestellte Information von Interesse, z.B. Objekte der selben Objektkategorie von Interesse) in einem Teil der Navigationskarte, der näher als der vordefinierten Abstand (162) von der Ansichtsposition (160) entfernt ist (also im ebenen Teil der Navigationskarte), hervorgehoben dargestellt ist.

Der Prozessor 120 erzeugt das Anzeigesignal 122 für eine Wiedergabe durch die Anzeigeeinrichtung so, dass sich die Navigationskarte entlang einer Referenzfläche streckt. Die Referenzfläche ist beispielsweise jene Fläche auf die sich die dreidimensionalen Navigationskartendaten (z.B. Koordinaten von Kartenobjekten oder Punkten) beziehen. Beispielsweise können Punkte der Navigationskarte eine Längen- und Breitenkoordinate oder eine Längen-, Breiten- und Höhenkoordinate aufweisen oder es können solche berechnet oder zugewiesen werden. Dabei erstreckt sich die Navigationskarte normalerweise in ihrer Längen- und Breitenausdehnung deutlich weiter als in ihren Höhenunterschieden.

Der Abstand der Höhendaten der Navigationskarte zur Referenzfläche variiert. Je nach Skalierung und/oder Offset kann beispielsweise ein Gebäude oder ein Gebirgszug deutlich über der Referenzfläche und ein See oder ein Tal deutlich unter der Referenzfläche liegen. In anderen Worten, der Datenbereitsteller 110 stellt Daten 112 einer dreidimensionalen Navigationskarte mit Höhendaten bereit. Die Navigationskarte erstreckt sich dabei beispielsweise insofern entlang der Referenzfläche, dass z.B. ein Abstand der Höhendaten der Navigationskarte von der Referenzfläche zu 50% (oder zu 70%, zu 90% oder immer) kleiner ist als ein vordefinierter maximaler Abstand (z.B. maximaler Wert der Höhendaten).

Die Referenzfläche kann als Bezugsfläche für die Punkte der Navigationskarte im Wesentlichen flach sein. Beispielsweise kann die Referenzfläche außerhalb eines Bereichs in dem die Referenzfläche durch den Prozessor 120 verbogen oder gekrümmt wird eben sein. In anderen Worten, die Referenzfläche kann vor dem Verbiegen durch den Prozessor 120 eben sein, also eine Ebene sein.

Ferner erzeugt der Prozessor 120 das Anzeigesignal 122 so, dass die Navigationskarte aus einer von der Position des beweglichen Objekts (des Fahrzeugs) abhängigen, über der Navigationskarte angeordneten Ansichtsposition betrachtet durch die Anzeige der Einrichtung wiedergebbar ist. Dadurch kann beispielsweise dem Benutzer die Sicht aus einer Vogelperspektive über jenen Punkt auf der Navigationskarte, der der bestimmten Position des beweglichen Objekts entspricht oder nahezu entspricht (z.B. abhängig von der Genauigkeit der Positionsermittlung) ermöglicht werden. In anderen Worten, die Ansichtsposition ist beispielsweise ein Punkt mit einer vordefinierten Höhe (z.B. fest oder einstellbar) über der Navigationskarte (und somit auch über der Referenzfläche) aus der die Navigationskarte betrachtet wird.

Der Prozessor 120 verbiegt die Referenzfläche ab einem vordefinierten Abstand von der Ansichtsposition entfernt zu der Ansichtsposition hin. Da die Ansichtsposition aus der die Navigationskarte betrachtet wird erhöht über der Navigationskarte angeordnet ist, kann jener Teil der Navigationskarte, der nahe der Ansichtsposition ist meist gut überblickt werden. Erst ab einer gewissen Distanz zu der Ansichtsposition (die z.B. abhängig ist von der Art und Höhe von Gebäuden und Geländeunebenheiten) kann der Benutzer nicht mehr ausreichend Informationen über diesen Teil der Navigationskarte erhalten, was durch das Verbiegen oder Krümmen der Referenzfläche und somit auch der Navigationskarte verbessert werden kann. Der Prozessor 120 verbiegt oder krümmt die Referenzfläche erst ab einem vordefinierten Abstand zu der Ansichtsposition hin. Der vordefinierte Abstand hängt erfindungsgemäß von der Stärke der Höhenvariation der Navigationskarte ab, sodass bei großen Höhenunterschieden (z.B. hohe Gebäude oder Geländeunebenheiten) die Referenzfläche bereits ab einem kleineren vordefinierten Abstand verbogen oder gekrümmt wird als bei kleinen Höhenunterschieden (z.B. niedrigen Gebäuden oder Geländeunebenheiten). Der Prozessor 120 kann die Referenzfläche zu der Ansichtsposition hin biegen, sodass die entfernten Teile der Navigationskarte eher von oben betrachtet werden können. So können von Teilen mit unterschiedlichen Höhen (z.B. Gebäude) weniger andere Bereiche verdecken werden. Z.B. kann der Prozessor 120 die Referenzfläche ab dem vordefinierten Abstand von der Ansichtsposition in Bezug auf die Ansichtsposition konkav (z.B. stetig oder stetig monoton) verbiegen.

In anderen Worten, der Prozessor 120 kann beispielsweise eine Transformation einer ebenen Referenzfläche (und dadurch der sich entlang der Referenzfläche erstreckenden dreidimensionalen Navigationskarte) in eine ab dem vordefinierten Abstand 162 gekrümmte Referenzfläche durchführen.

Fig. 1b zeigt ein Beispiel für eine Referenzfläche 150, die ab einem vordefinierten Abstand 162 von der Ansichtsposition 160 entfernt zu der Ansichtsposition 160 hin verbogen oder gekrümmt ist. Dabei ist durch die eingezeichneten Winkel 152, 154 zu erkennen, dass durch die Verbiegung der Referenzfläche 150 entfernte Bereiche der Navigationskarte (die sich entlang der Referenzfläche 150 erstreckt) mehr von oben betrachtet werden können, sodass Höhenunterschiede in der Navigationskarte weniger Einfluss auf sichtbare Details der Karte haben. In anderen Worten, der Prozessor 120 kann die Referenzfläche 150 verbiegen, sodass ein erster Winkel 152 zwischen einer Flächennormalen 156 durch einen in der Referenzfläche 150 liegenden und mit dem vordefinierten Abstand 162 in Blickrichtung von der Ansichtsposition 160 beabstandeten ersten Punkt 170 und einer sich von der Ansichtsposition 160 zu dem ersten Punkt 170 erstreckenden Geraden 164 größer ist als ein zweiter Winkel 154 zwischen einer Flächennormalen 158 durch einen in der Referenzfläche 150 liegenden und mit einem Abstand von mehr als dem vordefinierten Abstand 162 in Blickrichtung von der Ansichtsposition 160 beabstandeten zweiten Punkt 180 und einer sich von der Ansichtsposition 160 zu dem zweiten Punkt 180 erstreckenden Geraden 166. Die Eigenschaften des zweiten Punkts 180 muss nicht oder kann nicht jeder Punkt auf der Referenzfläche 150 erfüllen, der von der Ansichtsposition 160 weiter entfernt ist als der vordefinierte Abstand 162. Die Referenzfläche 150 ist jedoch so stark verbogen oder gekrümmt, dass es zumindest einen (normalerweise aber viele) Punkte auf der Referenzfläche 150 gibt, die die Eigenschaften des zweiten Punkts 180 erfüllen. Der vordefinierte Abstand 162 kann sich auf einen Abstand von der Ansichtsposition 160 selbst, der ermittelten Position des beweglichen Objekts oder auf einen Abstand einer Projektion der Ansichtsposition 160 auf die Referenzfläche (z.B. Punkt auf der Referenzfläche, der eine Flächennormale aufweist, die durch die Ansichtsposition verläuft) definiert sein, wie es in Fig. 1b gezeigt ist. Unabhängig davon, wie der vordefinierte Abstand 162 definiert ist, können die verschiedenen Definitionsmöglichkeiten einfach ineinander umgerechnet werden, wenn die Position der Ansichtsposition 160 in Bezug auf die Referenzfläche 150 bekannt ist.

Der Prozessor 120 kann die Referenzfläche 150 auf unterschiedliche Arten verbiegen oder krümmen. Beispielsweise kann der Prozessor 120 die Referenzfläche ab dem vordefinierten Abstand 162 umlaufend sphärisch verbiegen. Alternativ kann es beispielsweise auch ausreichend sein die Referenzfläche 150 in Blickrichtung zu der Ansichtsposition 160 hin zu verbiegen. Die Blickrichtung entspricht z.B. jener Richtung, in die sich das bewegliche Objekt (zum jeweiligen Zeitpunkt, also augenblicklich) bewegt. In anderen Worten, der Prozessor 120 kann das Anzeigesignal 122 so erzeugen, dass die Navigationskarte aus der Ansichtsposition 160 in einer ermittelten Bewegungsrichtung des beweglichen Objekts entsprechenden Blickrichtung durch die Anzeigeeinrichtung wiedergebbar ist. Dabei kann der Prozessor 120 die Referenzfläche 150 ab dem vordefinierten Abstand 162 in Blickrichtung von der Ansichtsposition 160 entfernt zu der Ansichtsposition 160 hin verbiegen. Der Rechenaufwand kann dadurch z.B. für das Erzeugen des Anzeigesignals 122 gering gehalten werden.

Durch das Verbiegen oder Krümmen der Referenzfläche 150 kann der gekrümmte Bereich der Referenzfläche 150 unterschiedlichste Formen annehmen. In einem einfachen Beispiel kann der Prozessor 120 beispielsweise die Referenzfläche 150 in dem vordefinierten Abstand 162 entlang einer in der Referenzfläche liegenden Geraden oder Kreises unter einem vordefinierten (festen oder einstellbaren) Winkel knicken, sodass jener Teil der Referenzfläche 150, der weiter als der vordefinierte Abstand 162 von der Ansichtsposition 160 entfernt ist, zu der Ansichtsposition 160 hin verbogen ist.

Alternativ kann beispielsweise der Prozessor 120 die Referenzfläche 150 ab dem vordefinierten Abstand 162 in Blickrichtung von der Ansichtsposition 160 entfernt kreiszylindermantelförmig zu der Ansichtsposition 160 hin verbiegen. Dies ist auch beispielsweise in dem Querschnitt von Fig. 1b gezeigt. Dabei schließt beispielsweise ein Teil eines Kreiszylindermantels in dem vordefinierten Abstand 162 an einen ebenen Teil der Referenzfläche 150 an. An dem anderen Ende des Kreiszylindermantels kann dann beispielsweise die Referenzfläche 150 wieder eben fortgesetzt werden. Insofern bildet in diesem Beispiel der gekrümmte Teil der Referenzfläche 150 einen Teil eines Kreiszylindermantels und ist somit kreiszylindermantelförmig verbogen. Beispielsweise können der ansichtspositionsnahe, ebene Teil der Referenzfläche und der ansichtspositionsferne, ebene Teil der Referenzfläche (die durch den gebogenen Teil getrennt sind) einen Winkel zwischen 50° - 130° (oder 60° - 120°, 70° - 110° oder 80° - 100°) einschließen. Dadurch kann der Rechenaufwand und somit auch die Hardwareanforderungen gering gehalten werden.

Allgemein kann der Prozessor 120 die Referenzfläche 150 basierend auf unterschiedlichen festen oder einstellbaren Biegeparametern verbiegen oder krümmen. Beispielsweise kann der Prozessor 120 optional die Referenzfläche 150 ab dem vordefinierten Abstand 162 von der Ansichtsposition 160 über eine einstellbare oder feste Biegelänge zu der Ansichtsposition 160 hin verbiegen. Alternativ oder zusätzlich kann der Prozessor 120 die Referenzfläche 150 beispielsweise ab dem vordefinierten Abstand 162 von der Ansichtsposition 160 mit einer einstellbaren oder festen (und z.B. konstanten) Krümmung (z.B. Krümmungsradius) zu der Ansichtsposition 160 hin verbiegen.

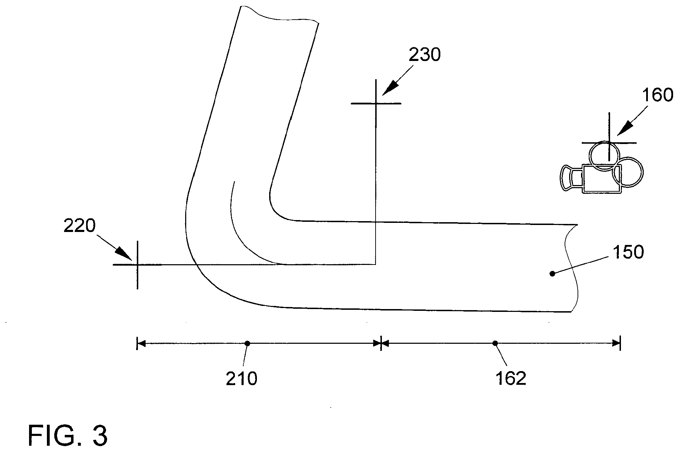

Zur Veranschaulichung dieser beiden Parameter zeigt beispielsweise Fig. 2 und Fig. 3 eine schematische Darstellung einer verbogenen oder gekrümmten Referenzfläche 150. Dabei ist bei der Ansichtsposition 160 eine Kamera angedeutet von der aus die Navigationskarte, die sich entlang der Referenzfläche erstreckt, betrachtet wird. Die Ansichtsposition 160 weist den vordefinierten Abstand 162 zu jenem Teil der Referenzfläche 150 auf, der gekrümmt oder verbogen ist. Die Referenzfläche 150 ist dabei mit einer endlichen Dicke dargestellt, um das Prinzip besser veranschaulichen zu können, jedoch könnte die Referenzfläche 150 auch nur als zweidimensionale Fläche dargestellt werden, wie es beispielsweise im Querschnitt von Fig. 1b gezeigt ist. Ab dem vordefinierten Abstand 162 beginnt der gekrümmte Teil der Referenzfläche 150. Dabei erstreckt sich die Krümmung über eine endliche Strecke, die als Biegelänge 210 bezeichnet werden kann. Über die Biegelänge 210 weist die Referenzfläche 150 eine konstante Krümmung (oder einen konstanten Krümmungsradius) auf. Der Punkt 220 kann dabei ein Maß für die Biegelänge oder einen Krümmungsverlauf (bend direction) veranschaulichen und der Punkt 230 kann beispielsweise ein Maß für die Krümmung oder eine Stärke eines Krümmungsfaktors (curvature) veranschaulichen. Die voreingestellten Biegewerte oder Biegeparameter können beispielsweise abhängig von der Position der Kamera oder der Ansichtsposition 160 sein. Bewegt sich beispielsweise die Ansichtsposition 160 (z.B. weil sich das bewegliche Objekt bewegt und dies entsprechend auf die Ansichtsposition abgebildet wird), so kann sich der Punkt an dem der vordefinierte Abstand 162 erreicht ist und die Krümmung der Referenzfläche 150 beginnt verändern. Entsprechend der Ausführungen zu Fig. 2 zeigt Fig. 3 ein weiteres Beispiel mit größerer Biegelänge 210 und kleinerer Krümmung (größerem Krümmungsradius) sowie weiter rechts befindlicher Ansichtsposition 160 (angedeutet durch die dargestellte Kamera).

Wie bereits erwähnt, kann die Referenzfläche 150 außerhalb des verbogenen oder gekrümmten Bereichs eben sein, wie es beispielsweise in Fig. 2 und 3 gezeigt ist. In anderen Worten, die Referenzfläche 150 kann in einem Bereich außerhalb eines durch zumindest den vordefinierten Abstand 162 und die einstellbare oder feste Biegelänge festgelegten und durch den Prozessor 120 verbogenen Bereichs eben sein. Dadurch kann beispielsweise der notwendige Rechenaufwand für den Prozessor 120 gering gehalten werden, da nur ein kleiner Bereich der Referenzfläche 150 gekrümmt wird.

Ebenso kann optional die Referenzfläche 150 im ansichtspositionsnahen Bereich der Referenzfläche 150 eben sein, wie es auch in Fig. 2 und 3 angedeutet ist. In anderen Worten, die Referenzfläche 150 kann in einem Bereich mit geringerem Abstand als dem vordefinierten Abstand 162 zu der Ansichtsposition 160 eben sein. So können beispielsweise einerseits Verzerrungen der Navigationskarte in diesem Bereich für den Benutzer gering gehalten werden und andererseits der Rechenaufwand gering gehalten werden.

Wie bereits erwähnt, kann sich der Punkt oder die Linie, an der der vordefinierte Abstand 162 von der Ansichtsposition 160 entfernt erreicht ist, verändern oder verschieben, wenn sich das bewegliche Objekt bewegt und diese Bewegung entsprechend auf eine Bewegung der Ansichtsposition 160 abgebildet wird.

Der Prozessor 120 kann also die Referenzfläche 150 dynamisch ab dem vordefinierten Abstand 162 von der sich entsprechend einer Bewegung des beweglichen Objekts relativ zu der Navigationskarte bewegenden Ansichtsposition 160 zu der Ansichtsposition 160 hin verbiegen. Dadurch kann beispielsweise gewährleistet werden, dass die Navigationskarte in der Nähe der Ansichtsposition 160 mit geringen Verzerrungen für den Betrachter dargestellt wird und trotzdem in größerer Entfernung Informationen wiedergegeben werden, die ansonsten für einen Benutzer durch Objekte verdeckt werden würden, auch wenn sich das bewegliche Objekt bewegt.

Die Art und Stärke der Krümmung der Referenzfläche und dadurch der Navigationskarte kann durch verschiedene Biegeparameter definiert sein (z.B. Biegelänge und Krümmung), die fest oder einstellbar sein können. Sind ein oder mehrere Biegeparameter einstellbar, so kann diese Einstellung durch einen Benutzer oder aber auch automatisch in Abhängigkeit von unterschiedlichen Bedingungen vorgenommen werden. Beispielsweise kann die Art und Beschaffenheit der Navigationskarte in dem darzustellenden Bereich Einfluss auf die automatische Einstellung der Biegeparameter durch den Prozessor 120 haben. So kann beispielsweise in Bereichen in denen hohe Gebäude oder große Geländeunebenheiten auftreten, die Referenzfläche 150 stärker verbogen werden als im flachen Gelände. In anderen Worten, der Prozessor 120 kann beispielsweise optional die Referenzfläche 150 in Abhängigkeit von einem auf den Höhendaten basierenden maximalen oder mittleren Abstand der Navigationskarte von der Referenzfläche 150 verbiegen. Ist der mittlere Abstand oder der maximale Abstand der Navigationskarte von der Referenzfläche 150 groß, so kann die Referenzfläche 150 stärker gekrümmt oder verbogen werden als bei geringerem maximalen oder mittleren Abstand. Dadurch kann die für den Benutzer gebotene Informationsdichte von benötigten Informationen oder die Benutzungssicherheit und Benutzungszuverlässigkeit in Abhängigkeit von der Art und Beschaffenheit der Navigationskarte im dargestellten Bereich für unterschiedliche Arten und Beschaffenheiten von Navigationskarten verbessert werden.

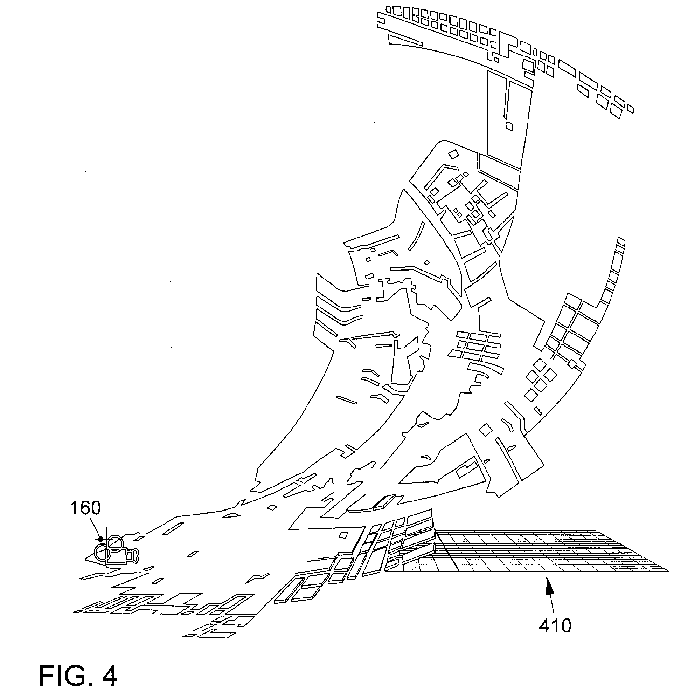

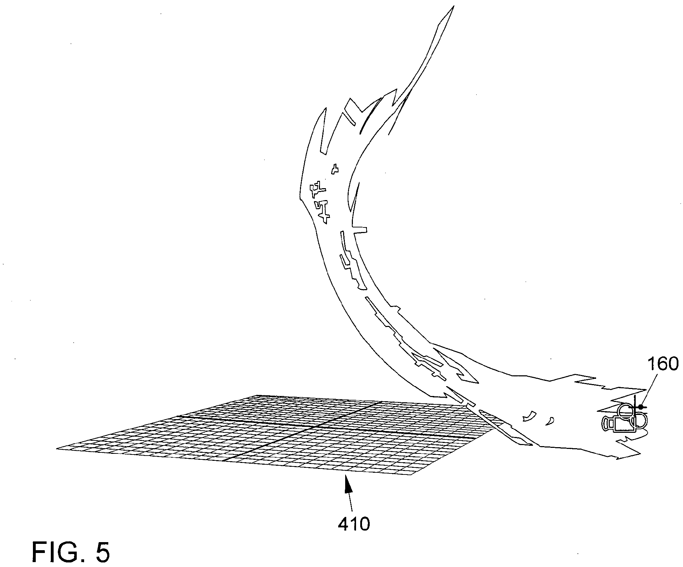

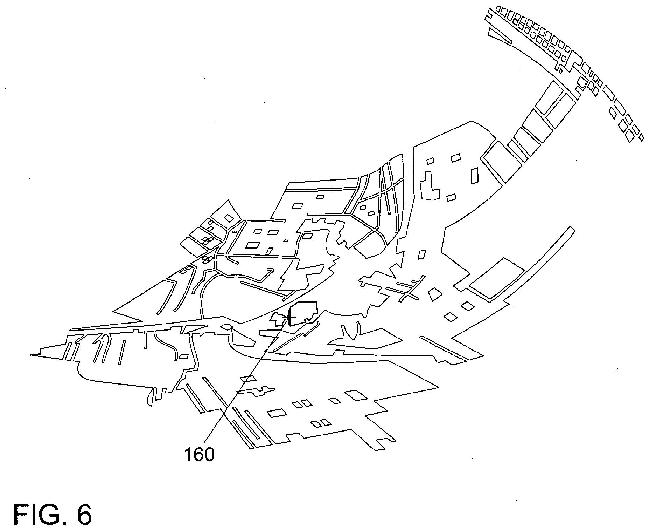

Die Fig. 4 bis 6 zeigen unterschiedliche Beispiele von gekrümmten Navigationskarten aus unterschiedlichen Ansichtspositionen 160. Dabei ist auch in Fig. 4 und 5 angedeutet, wie im Vergleich eine ebene Referenzfläche 410 aussehen würde. Die in den Fig. 4 bis 6 gezeigten Navigationskarten sind schematische Darstellungen von Straßenzügen und können als Platzhalter für einen realen Stadtplan angesehen werden.

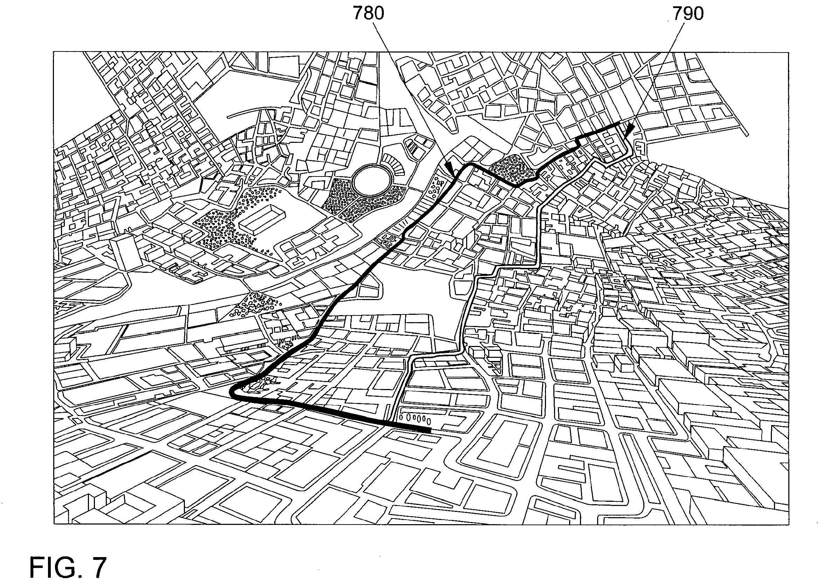

Fig. 7 zeigt ein Beispiel für die hervorgehobene Darstellung einer Information von Interesse im gebogenen Teil der Navigationskarte. In dem gezeigten Beispiel ist die Information von Interesse eine zur bevorzugten Fahrtroute 710 alternative Fahrtroute 720. Beispielsweise kann dadurch eine schnellste und/oder kürzeste Strecke für die Navigationszielführung in einer gebogenen Kartendarstellung dargestellt werden. Eine alternative Fahrtroute kann beispielsweise für den Benutzer auswählbar vor Beginn einer durch die Navigationsvorrichtung unterstützten Fahrt oder während der Fahrt eingeblendet werden.

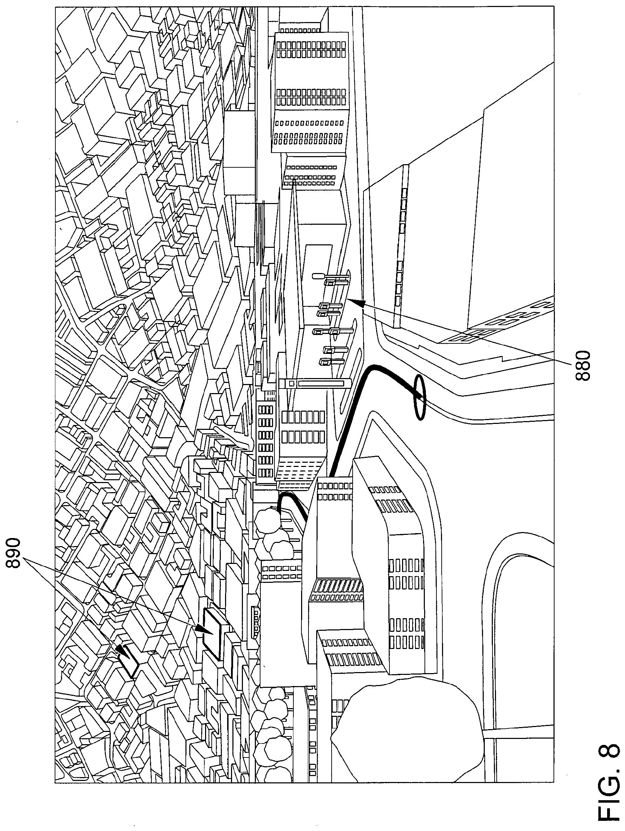

Fig. 8 zeigt ein Beispiel für die hervorgehobene Darstellung von Informationen von Interesse im gebogenen Teil der Navigationskarte. In dem gezeigten Beispiel sind die Information von Interesse Objekte von Interesse 810 (POI, point of interest) einer Objektkategorie von Interesse. Z. B. können voreingestellte Objekte von Interesse (in diesem Beispiel eine Tankstelle) in der gebogenen Variante der Karte in der Entfernung zur groben Orientierung grafisch (z.B. flach) angezeigt werden. Zusätzlich können Objekte von Interesse 820 (in diesem Fall eine Tankstelle) die unmittelbar auf der Strecke liegen in voller Darstellung (dreidimensional) angezeigt und/oder animiert werden.

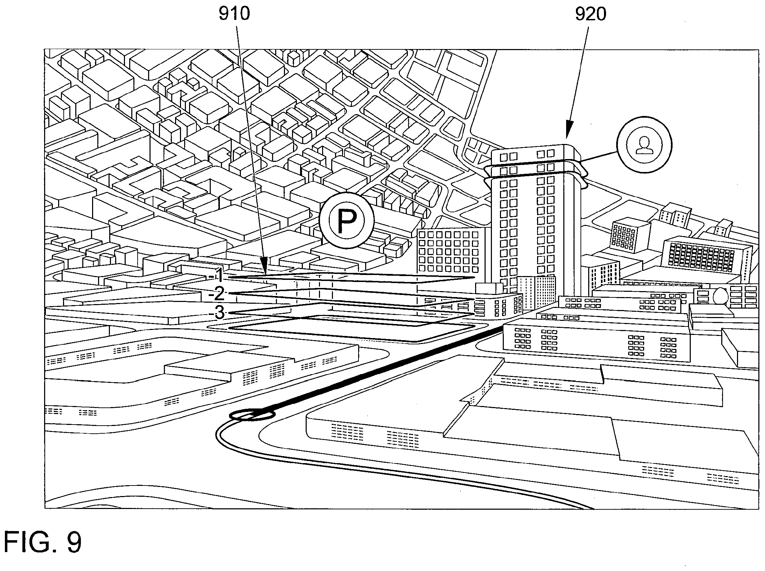

Fig. 9 zeigt ein Beispiel für zusätzlich hervorgehoben darstellbare Informationen von Interesse im ebenen Teil der Navigationskarte. Beispielsweise kann eine Animation und/oder Darstellung einer Tiefgarage 910 (z.B. die unterirdischen Ebenen der Tiefgarage können nach oben dargestellt werden) in der Nähe einer Animation und/oder Darstellung der Zieladresse 920 hervorgehoben eingeblendet werden.

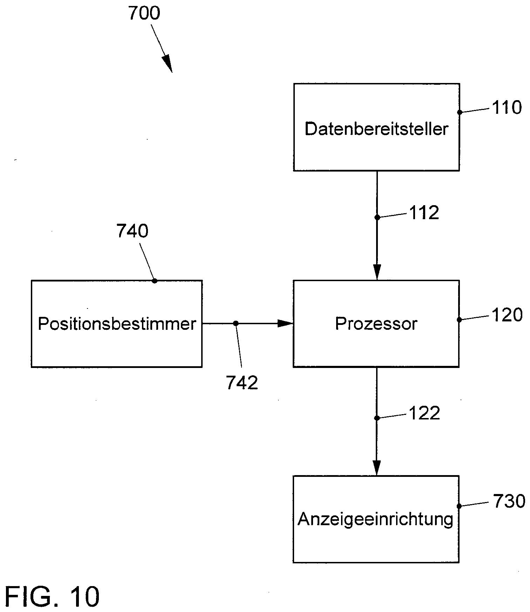

Wie bereits erwähnt, kann in einigen Beispielen die Navigationsvorrichtung optional eine Anzeigeeinrichtung und/oder einen Positionsbestimmer (oder ein Lokalisierungssystem) aufweisen. Fig. 10 zeigt ein Blockdiagramm einer Navigationsvorrichtung 700 entsprechend eines solchen Ausführungsbeispiels. Die Navigationsvorrichtung 700 weist einen ähnlichen Aufbau, wie die Navigationsvorrichtung aus Fig. 1 auf. Insofern gelten ergänzend die zuvor gemachten Ausführungen. Jedoch weist die Navigationsvorrichtung 700 zusätzlich eine Anzeigeeinrichtung 730 auf, die mit dem Prozessor 120 verbunden ist. Ferner weist die Navigationsvorrichtung 700 einen Positionsbestimmer 740 auf, der ebenfalls mit dem Prozessor 120 verbunden ist. Die Anzeigeeinrichtung 730 (z.B. ein Bildschirm, ein berührungsempfindlicher Bildschirm (Touch Screen) oder eine Kopf-Hoch-Anzeige (head-up display)) kann basierend auf dem Anzeigesignal 122 die Navigationskarte auf einer Anzeigefläche für einen Benutzer wiedergeben. Ferner kann der Positionsbestimmer 740 (z.B. GPS-System) eine Position 742 des Fahrzeugs bestimmen und den Prozessor 120 bereitstellen.

Zusätzlich kann die Navigationsvorrichtung 700 einen oder mehrere optionale zusätzliche Aspekte realisieren, die einem oder mehreren Aspekten entsprechen, die in Zusammenhang mit dem beschriebenen Konzept und/oder einem zuvor beschriebenen Beispiel erwähnt wurden.

Allgemein können beispielsweise der Datenbereitsteller 110, der Prozessor 120, die Anzeigeeinrichtung 730 und/oder der Positionsbestimmmer 740 oder andere optionale Einheiten unabhängige Hardwareeinheiten oder Teil eines Computers, eines digitalen Signalprozessors oder eines Mikrokontrollers sein sowie als Computerprogramm oder Softwareprodukt zur Ausführung auf einem Computer, einem digitalen Signalprozessor oder einem Mikrokontroller realisiert sein. Der Datenbereitsteller 110, der Prozessor 120, die Anzeigeeinrichtung 730 und/oder der Positionsbestimmmer 740 oder andere optionale Einheiten können beispielsweise unabhängig voneinander oder zumindest teilweise zusammen (z.B. auf demselben Chip oder durch dasselbe Computerprogramm) realisiert sein.

Einige Ausführungsbeispiele beziehen sich auf ein Fahrzeug mit einer festinstallierten Navigationsvorrichtung nach dem zuvor beschriebenen Konzept.

Einige Ausführungsbeispiele beziehen sich auf eine Stadtverbiegung (city bend) oder Stadtplanverbiegung. Durch das beschriebene Prinzip kann beispielsweise eine bessere Lesbarkeit einer Zielführung einer Navigationskarte erreicht werden. Beispielsweise kann der vorausschauende Teil der Karte in Abhängigkeit des Betrachtungswinkels hochgeklappt werden, sodass man eine nahezu orthogonale Draufsicht in Fahrtrichtung erreichen kann. Das beschriebene Konzept basiert beispielsweise auf einer Biegung (Krümmung) von Teilen oder des gesamten dreidimensionalen (3D) Stadtplans auf dem sich die Gebäude befinden.

Dadurch kann beispielsweise vermieden werden, dass bei aus der Vogelperspektive dargestellten Navigationskarten die meist farblich gekennzeichnete Zielführung durch zu hohe Gebäude verdeckt wird und somit eine vorausschauende Zielführung nicht mehr oder nicht optimal gewährleistet werden kann. Dies kann dadurch verbessert werden, dass man den vorausblickenden Teil der Karte in Richtung Betrachter (Kamera) richtet (biegt).

Eine solche Anwendung kann beispielsweise im Rahmen einer Kartendarstellung oder Fahrt für das Auto verwendet werden (3D und 2D Navigationsfahrt).

Das beschriebene Konzept kann es dem Benutzer (user) erlauben, bei einer dreidimensionalen Karte mit Hilfe einer Biegefunktion (bend function) den vorausschauenden Kartenverlauf bis zu 90° oder mehr in die Richtung des Betrachters oder der Kamera zu richten (biegen).

Durch die Möglichkeit den hinteren Teil der Karte zu biegen kann es gewährleisten werden, dem Betrachter (user) einen vorausschauenden Blick in die Zielposition oder den folgenden Straßenverlauf zu ermöglichen. Im Unterschied zu einem vorausschauenden Verlauf der Streckenführung in einer klassischen zweidimensionalen Karte bei Ansicht der gesamten Kartendarstellung, kann dies durch das vorgeschlagene Konzept auch bei einer dreidimensionalen Karte ermöglicht werden. Die Art und Weise oder die Stärke der Krümmung kann beispielsweise von Stadttyp und/oder der Art der Gebäude abhängig gemacht werden. Die Biegung des hinteren Teils der Karte kann z.B. bei Hochhäusern stärker als bei normalen herkömmlichen Wohngebäuden, die niedrigere Höhen aufweisen, sein.

Die Biegefunktion kann beispielsweise zwei Parameter bieten um sich ggf. an das richtige Areal anzupassen, um einen guten Biegefaktor (bend factor) für den Betrachter (Kamera) zu erstellen. Beispielsweise können diese Biegeparameter einerseits die Krümmung oder Stärke des Krümmungsfaktors (curvature) und die Biegelänge oder der Krümmungsverlauf (bend direction) sein. Beispielsweise kann auch nach einmaligem Einstellen des Biegefaktors (bend factor) die gesamte Einstellung danach abhängig von der Position (Translationswerte) des Betrachters oder des beweglichen Objekts (Kamera) sein.

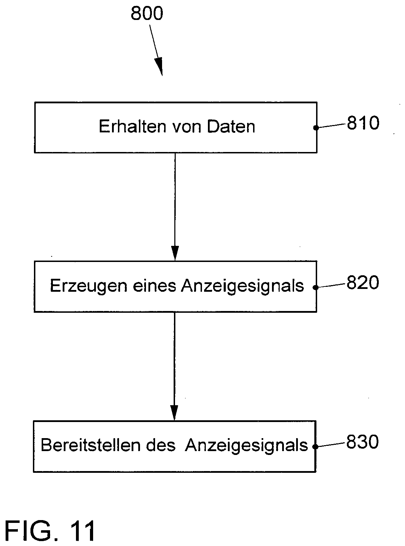

Fig. 11 zeigt ein Flussdiagramm eines Verfahrens 800 zur Erzeugung eines Anzeigesignals für eine Navigationsvorrichtung für ein Fahrzeug entsprechend einem Ausführungsbeispiel. Das Verfahren 800 umfasst ein Erhalten 810 von Daten einer Navigationskarte einer Umgebung eines Fahrzeugs basierend auf einer ermittelten Position des Fahrzeugs. Ferner umfasst das Verfahren 800 ein Erzeugen 820 eines die Navigationskarte repräsentierenden Anzeigesignals, sodass die Navigationskarte sich entlang einer Referenzfläche erstreckt und aus einer von der Position des Fahrzeugs abhängigen, über der Navigationskarte angeordneten Ansichtsposition betrachtet wird. Dabei wird die Referenzfläche ab einem vordefinierten Abstand von der Ansichtsposition entfernt zu der Ansichtsposition hin verbogen. Das Anzeigesignal wird erzeugt 820, sodass eine neben einer bevorzugten Fahrtroute zusätzliche Information von Interesse in einem Teil der Navigationskarte, der weiter als der vordefinierten Abstand von der Ansichtsposition entfernt ist, hervorgehoben dargestellt ist. Zusätzlich umfasst das Verfahren 800 ein Bereitstellen 830 des die Navigationskarte repräsentierenden Anzeigesignals für eine Anzeigeeinrichtung zur Wiedergabe der Navigationskarte.

Das Verfahren 800 kann weitere optionale, zusätzliche oder alternative Verfahrensschritte umfassen, die optionalen, zusätzlichen oder alternativen Ausgestaltungen entsprechen, die im Zusammenhang mit dem zuvor beschriebenen Konzept oder zuvor beschriebenen Ausführungsbeispielen erläutert wurden.

Die in der vorstehenden Beschreibung, den nachfolgenden Ansprüchen und den beigefügten Figuren offenbarten Merkmale können, im Rahmen der nachfolgenden Patentansprüche, sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen ComputerProzessor (CPU = Central Processing Unit), einen GrafikProzessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem MikroProzessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hineinschreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Navigationsvorrichtung
- 110: Datenbereitsteller
- 112: Daten einer Navigationskarte
- 120: Prozessor
- 122: Anzeigesignal
- 150: Referenzfläche
- 152: Winkel
- 154: Winkel
- 156: Flächennormale
- 158: Flächennormale
- 160: Ansichtsposition
- 162: vordefinierten Abstand
- 164: Gerade
- 166: Gerade
- 170: erster Punkt
- 180: zweiter Punkt
- 210: Biegelänge
- 220: Punkt
- 230: Punkt
- 410: Referenzfläche
- 700: Navigationsvorrichtung
- 730: Anzeigeeinrichtung
- 742: Position
- 780: alternative Fahrtroute
- 790: bevorzugte Fahrtroute
- 800: Verfahrens zur Erzeugung eines Anzeigesignals
- 810: Erhalten von Daten einer Navigationskarte
- 820: Erzeugen eines die Navigationskarte repräsentierenden Anzeigesignals
- 830: Bereitstellen des die Navigationskarte repräsentierenden Anzeigesignals
- 880: Objekt von Interesse
- 890: Objekt von Interesse
- 910: Tiefgarage
- 920: Zieladresse

## Patentansprüche

1. Eine Navigationsvorrichtung (100) für ein Fahrzeug, mit folgenden Merkmalen:
einem Datenbereitsteller (110), der ausgelegt ist, um Daten (112) einer Navigationskarte bereitzustellen; und
einem Prozessor (120), der ausgelegt ist, um basierend auf einer ermittelten Position (742) eines Fahrzeugs Daten (112) einer Navigationskarte einer Umgebung des Fahrzeugs von dem Datenbereitsteller (110) zu erhalten und ein die Navigationskarte repräsentierendes Anzeigesignal (122) für eine Anzeigeeinrichtung (730) zur Wiedergabe der Navigationskarte bereitzustellen,
wobei der Prozessor (120) ausgelegt ist, um das Anzeigesignal (122) zu erzeugen, sodass die Navigationskarte sich entlang einer Referenzfläche (150) erstreckend und aus einer von der Position (742) des Fahrzeugs abhängigen, über der Navigationskarte angeordneten Ansichtsposition (160) betrachtet durch die Anzeigeeinrichtung (730) wiedergebbar ist,
wobei der Prozessor (120) ausgelegt ist, um die Referenzfläche (150) ab einem vordefinierten Abstand (162) von der Ansichtsposition (160) entfernt zu der Ansichtsposition (160) hin zu verbiegen,
wobei der Prozessor (120) ausgelegt ist, um das Anzeigesignal (122) zu erzeugen, sodass eine neben einer bevorzugten Fahrtroute zusätzliche Information von Interesse in einem Teil der Navigationskarte, der weiter als der vordefinierte Abstand (162) von der Ansichtsposition (160) entfernt ist, hervorgehoben dargestellt ist,
wobei die zusätzliche Information von Interesse ein Objekt von Interesse ist, **dadurch gekennzeichnet, dass**
das Objekt von Interesse zu einer Objektkategorie von Interesse gehört, wobei das Objekt von Interesse das am schnellsten von der bevorzugten Fahrtroute erreichbare Objekt von Interesse der Objekte der Objektkategorie von Interesse ist,
wobei der vordefinierte Abstand (162) von einer Stärke einer Höhenvariation der Navigationskarte abhängt, sodass bei großen Höhenunterschieden die Referenzfläche (150) bereits ab einem kleineren vordefinierten Abstand verbogen oder gekrümmt wird als bei kleinen Höhenunterschieden.

2. Navigationsvorrichtung nach Anspruch 1, wobei die zusätzliche Information von Interesse zusätzlich eine zu der bevorzugten Fahrtroute alternative Fahrtroute ist.

3. Navigationsvorrichtung nach Anspruch 2, wobei der Prozessor (120) ausgelegt ist, um das Anzeigesignal (122) zu erzeugen, sodass vor Beginn einer navigationsunterstützten Fahrt die bevorzugte Fahrtroute und die alternative Fahrtroute hervorgehoben dargestellt werden.

4. Navigationsvorrichtung nach einem der Ansprüche 1 bis 3, wobei das Objekt von Interesse zweidimensional in der Navigationskarte dargestellt wird.

5. Navigationsvorrichtung nach einem der vorhergehenden Ansprüche, wobei ein Ziel der bevorzugten Fahrtroute weiter als der vordefinierte Abstand (162) von der Ansichtsposition (160) entfernt ist.

6. Navigationsvorrichtung nach einem der vorhergehenden Ansprüche, wobei der Prozessor (120) ausgelegt ist, um die Referenzfläche (150) zu verbiegen, sodass ein erster Winkel (152) zwischen einer Flächennormalen (156) durch einen in der Referenzfläche (150) liegenden und mit dem vordefinierten Abstand (162) in Blickrichtung von der Ansichtsposition (160) beabstandeten ersten Punkt (170) und einer sich von der Ansichtsposition (160) zu dem ersten Punkt erstreckenden Geraden (164) größer ist als ein zweiter Winkel (154) zwischen einer Flächennormalen (158) durch einen in der Referenzfläche (150) liegenden und mit einem Abstand (162) von mehr als dem vordefinierten Abstand (162) in Blickrichtung von der Ansichtsposition (160) beabstandeten zweiten Punkt (180) und einer sich von der Ansichtsposition (160) zu dem zweiten Punkt (180) erstreckenden Geraden (166).

7. Navigationsvorrichtung nach einem der vorhergehenden Ansprüche, wobei der Prozessor (120) ausgelegt ist, um das Anzeigesignal (122) zu erzeugen, sodass die Navigationskarte aus der Ansichtsposition (160) in einer einer ermittelten Bewegungsrichtung des Fahrzeugs entsprechenden Blickrichtung durch die Anzeigeeinrichtung (730) wiedergebbar ist, wobei der Prozessor (120) ausgelegt ist, um die Referenzfläche (150) ab dem vordefinierten Abstand (162) in Blickrichtung von der Ansichtsposition (160) entfernt zu der Ansichtsposition (160) hin zu verbiegen.

8. Navigationsvorrichtung nach einem der vorhergehenden Ansprüche, das ferner eine Anzeigeeinrichtung (730) aufweist, die ausgelegt ist, um basierend auf dem Anzeigesignal (122) die Navigationskarte wiederzugeben.

9. Verfahren (800) zur Erzeugung eines Anzeigesignals für eine Navigationsvorrichtung für ein Fahrzeug, mit folgenden Schritten:
Erhalten (810) von Daten (112) einer Navigationskarte einer Umgebung eines Fahrzeugs basierend auf einer ermittelten Position des Fahrzeugs;
Erzeugen (820) eines die Navigationskarte repräsentierenden Anzeigesignals (122), sodass die Navigationskarte sich entlang einer Referenzfläche (150) erstreckt und aus einer von der Position des Fahrzeugs abhängigen, über der Navigationskarte angeordneten Ansichtsposition (160) betrachtet wird, wobei die Referenzfläche (150) ab einem vordefinierten Abstand (162) von der Ansichtsposition (160) entfernt zu der Ansichtsposition (160) hin verbogen ist,
wobei das Anzeigesignal (122) erzeugt wird, sodass eine neben einer bevorzugten Fahrtroute zusätzliche Information von Interesse in einem Teil der Navigationskarte, der weiter als der vordefinierte Abstand (162) von der Ansichtsposition (160) entfernt ist, hervorgehoben dargestellt ist;
Bereitstellen (830) des die Navigationskarte repräsentierenden Anzeigesignals (122) für eine Anzeigeeinrichtung (730) zur Wiedergabe der Navigationskarte,
wobei die zusätzliche Information von Interesse ein Objekt von Interesse ist, **dadurch gekennzeichnet, dass** das Objekt von Interesse zu einer Objektkategorie von Interesse gehört, wobei das Objekt von Interesse das am schnellsten von der bevorzugten Fahrtroute erreichbare Objekt von Interesse der Objekte der Objektkategorie von Interesse ist,
wobei der vordefinierte Abstand (162) von einer Stärke einer Höhenvariation der Navigationskarte abhängt, sodass bei großen Höhenunterschieden die Referenzfläche (150) bereits ab einem kleineren vordefinierten Abstand verbogen oder gekrümmt wird als bei kleinen Höhenunterschieden.

10. Programm mit einem Programmcode zum Durchführen eines Verfahrens gemäß Anspruch 9, wenn der Programmcode auf einem Computer, einem Prozessor oder einer programmierbaren Hardwarekomponente ausgeführt wird.

## Claims

1. A navigation device (100) for a vehicle, having the following features:
A data provider (110), which is designed in order to provide data (112) of a navigation map; and
a processor (120), which is designed in order to receive data (112) of a navigation map for an environment of the vehicle from the data provider (110) based on a determined position (742) of the vehicle and to provide a display signal (122) representing the navigation map for a display device (730) for reproducing the navigation map,
wherein the processor (120) is designed in order to generate the display signal (122), so that the navigation map can be reproduced by the display device (730) so as to extend along a reference area (150) and is viewed from a viewing position (160) that depends on the position (742) of the vehicle and is arranged above the navigation map,
wherein the processor (120) is designed, in order to bend the reference area (150) from a predefined distance (162) away from the viewing position (160) towards the viewing position (160),
wherein the processor (120) is designed, in order to generate the display signal (122), so that an additional information item of interest in addition to a preferred route is shown highlighted in a part of the navigation map that is further away from the viewing position (160) than the predefined distance (162),
wherein the additional information item of interest is an object of interest,
**characterized in that**
the object of interest belongs to an object category of interest,
wherein the object of interest is the object of interest of the objects of the object category of interest most rapidly accessible by the preferred route,
wherein the predefined distance (162) depends on a magnitude of the height variation of the navigation map, so that in the case of large height differences the reference area (150) is already bent or curved from a smaller predefined distance as in the case of small height differences.

2. A navigation device according to Claim 1, wherein the additional information item of interest is additionally an alternative route to the preferred route.

3. A navigation device according to Claim 2, wherein the processor (120) is designed, in order to generate the display signal (122), so that before the beginning of a navigation-assisted trip the preferred route and the alternative route are shown highlighted.

4. A navigation device according to Claims 1 to 3, wherein the object of interest is shown two-dimensionally in the navigation map.

5. A navigation device according to any one of the preceding claims, wherein the destination of the preferred route is further away from the viewing position (160) than the predefined distance (162).

6. A navigation device according to any one of the preceding claims, wherein the processor (120) is designed, in order to bend the reference area (150) so that a first angle (152) between a surface normal (156) through a first point (170) lying in the reference area (150) and spaced apart at the predefined distance (162) in the viewing direction from the viewing position (160) and a straight line (164) extending from the viewing position (160) to the first point is greater than a second angle (154) between a surface normal (158) through a second point (180) lying in the reference area (150) and spaced apart at a distance (162) of more than the predefined distance (162) in the viewing direction from the viewing position (160) and a straight line (166) extending from the viewing position (160) to the second point (180).

7. A navigation device according to any one of the preceding claims, wherein the processor (120) is designed in order to generate the display signal (122) so that the navigation map can be reproduced from the viewing position (160) in a viewing direction corresponding to a determined direction of movement of the vehicle by the display device (730), wherein the processor (120) is designed, in order to bend the reference area (150) from the predefined distance (162) in the viewing direction away from the viewing position (160) toward the viewing position (160).

8. A navigation device according to any one of the preceding claims, which also has a display device (730), which is designed, to reproduce the navigation map based on the display signal (122).

9. A method (800) for generating a display signal for a navigation device for a vehicle, with the following steps:
Receiving (810) data (112) of a navigation map of an environment of a vehicle based on a determined position of the vehicle;
generating (820) a display signal (122) representing the navigation map, so that the navigation map extends along a reference area (150) and is viewed from a viewing position (160) that depends on the position of the vehicle and is arranged above the navigation map, wherein the reference area (150) is bent from a predefined distance (162) away from the viewing position (160) toward the viewing position (160),
wherein the display signal (122) is generated, so that an additional information item of interest in addition to a preferred route is shown highlighted in a part of the navigation map, which is further away from the viewing position (160) than the predefined distance (162);
providing (830) the display signal (122) representing the navigation map for a display device (730) for reproducing the navigation map,
wherein the additional information item of interest is an object of interest,
**characterized in that**
the object of interest belongs to an object category of interest,
wherein the object of interest is the object of interest of the objects of the object category of interest most rapidly accessible by the preferred route,
wherein the predefined distance (162) depends on a magnitude of the height variation of the navigation map, so that in the case of large height differences the reference area (150) is already bent or curved from a smaller predefined distance as in the case of small height differences.

10. A program with a program code for implementing a method according to Claim 9, if the program code is implemented on a computer, a processor or a programmable hardware component.

## Revendications

1. Dispositif de navigation (100) pour un véhicule, avec les caractéristiques suivantes :
un fournisseur de données (110), qui est conçu pour fournir des données (112) d'une carte de navigation ; et
un processeur (120), qui est conçu pour obtenir, à partir d'une position (742) déterminée d'un véhicule, des données (112) d'une carte de navigation d'un environnement du véhicule, de la part du fournisseur de données (110) et pour fournir un signal d'affichage (122) représentant la carte de navigation à un dispositif d'affichage (730) pour la représentation de la carte de navigation,
le processeur (120) étant conçu pour générer le signal d'affichage (122) de façon à ce que la carte de navigation puisse être représentée par le dispositif d'affichage (730) de façon à s'étendre le long d'une surface de référence (150) et à partir d'un point de vue (160) disposé au-dessus de la carte de navigation et dépendant de la position (742) du véhicule,
le processeur (120) étant conçu pour déformer la surface de référence (150) à partir d'une distance prédéterminée (162) par rapport au point de vue (160), en s'éloignant du point de vue (160),
le processeur (120) étant conçu pour générer le signal d'affichage (122) de façon à ce qu'une information supplémentaire d'intérêt en plus d'un itinéraire préféré est représentée de façon à être mise en relief sur une partie de la carte de navigation qui est plus éloigné du point de vue (160) que la direction (162) prédéfinie, l'information supplémentaire d'intérêt étant un objet d'intérêt,
**caractérisé en ce que**
l'objet d'intérêt appartient à une catégorie d'objets d'intérêt, l'objet d'intérêt étant l'objet d'intérêt atteignable le plus rapidement par l'itinéraire préféré parmi les objets de la catégorie d'objets d'intérêt,
la distance prédéfinie (162) dépendant d'une intensité d'une variation d'altitude de la carte de navigation, de façon à ce que, lors de grandes différences d'altitude, la surface de référence (150) soit déformée ou courbée à partir d'une distance prédéfinie plus petite que lors de petites différences d'altitude.

2. Dispositif de navigation selon la revendication 1, l'information d'intérêt supplémentaire étant en outre un itinéraire alternatif à l'itinéraire préféré.

3. Dispositif de navigation selon la revendication 2, le processeur (120) étant conçu pour générer le signal d'affichage (122) de façon à ce que, avant le début d'un trajet assisté par la navigation, l'itinéraire préféré et l'itinéraire alternatif soient représentés de façon à être mis en relief.

4. Dispositif de navigation selon l'une des revendications 1 à 3, l'objet d'intérêt étant représenté de manière bidimensionnelle sur la carte de navigation.

5. Dispositif de navigation selon l'une des revendications précédentes, une destination de l'itinéraire préféré étant plus éloigné du point de vue (160) que la distance prédéfinie (162).

6. Dispositif de navigation selon l'une des revendications précédentes, le processeur (120) étant conçu pour déformer la surface de référence (150) de façon à ce qu'un premier angle (152) entre une normale à la surface (156) passant par un premier point (170) se trouvant dans la surface de référence (150) et distant de la distance prédéfinie (162), dans la direction de visualisation, du point de vue (160) et une droite (164) s'étendant du point de vue (160) vers le premier point soit supérieur à un deuxième angle (154) entre une normale à la surface (158) passant par un deuxième point (180) se trouvant dans la surface de référence (150) et distant d'une distance (162) supérieure à la distance prédéfinie (162), dans la direction de visualisation, du point de vue (160) et une droite (166) s'étendant du point de vue (160) vers le deuxième point (180).

7. Dispositif de navigation selon l'une des revendications précédentes, le processeur (120) étant conçu pour générer le signal d'affichage (122) de façon à ce que la carte de navigation puisse être représentée par le dispositif d'affichage (730) à partir du point de vue (160) dans une direction de visualisation correspondant à une direction de mouvement déterminée du véhicule, le processeur (120) étant conçu pour déformer la surface de référence (150) à partir de la distance prédéfinie (162), dans la direction de visualisation, du point de vue (160), en s'éloignant du point de vue (160).

8. Dispositif de navigation selon l'une des revendications précédentes, qui comprend en outre un dispositif d'affichage (730) qui est conçu pour représenter la carte de navigation sur la base du signal d'affichage (122).

9. Procédé (800) pour la génération d'un signal d'affichage pour un dispositif de navigation pour un véhicule, avec les étapes suivantes :
obtention (810) de données (112) d'une carte de navigation d'un environnement d'un véhicule sur la base d'une position déterminée du véhicule ;
génération (820) d'un signal d'affichage (122) représentant la carte de navigation, de façon à ce que la carte de navigation s'étende le long d'une surface de référence (150) et à partir d'un point de vue (160) dépendant de la position du véhicule et disposé au-dessus de la carte de navigation, la surface de référence (150) étant déformée à partir d'une distance prédéfinie (162) du point de vue (160) en s'éloignant du point de vue (160),
le signal d'affichage (122) étant généré de façon à ce que, en plus d'un itinéraire préféré, une information d'intérêt supplémentaire soit représentée de façon à être mise en relief dans une partie de la carte de navigation, qui est éloignée du point de vue (160) plus que de la distance prédéfinie (162) ;
fourniture (830) du signal d'affichage (122) représentant la carte de navigation à un dispositif d'affichage (730) pour la représentation de la carte de navigation,
l'information d'intérêt supplémentaire étant un objet d'intérêt,
**caractérisé en ce que**
l'objet d'intérêt appartenant à une catégorie d'objets d'intérêt,
l'objet d'intérêt étant l'objet d'intérêt atteignable le plus rapidement par l'itinéraire préféré parmi les objets de la catégorie d'objets d'intérêt,
la distance prédéfinie (162) dépendant d'une intensité d'une variation d'altitude de la carte de navigation, de façon à ce que, lors de grandes différences d'altitude, la surface de référence (150) soit déformée ou courbée à partir d'une distance prédéfinie plus petite que lors de petites différences d'altitude.

10. Programme avec un code de programme pour l'exécution d'un procédé selon la revendication 9, lorsque le code du programme est exécuté sur un ordinateur, un processeur ou un composant matériel programmable.
